# EUROPÄISCHE PATENTSCHRIFT

(11) **EP 0 488 946 B1**
(45) Veröffentlichungstag und Bekanntmachung des Hinweises auf die Patenterteilung: **26.10.1994**
(21) Anmeldenummer: 91810889.5
(22) Anmeldetag: 15.11.1991
(51) Int. Cl.: B25J 9/04

(54) **Handhabungsgerät zum Transportieren und Positionieren von Werkstücken**
Manipulator for transporting and positioning workpieces
Manipulateur pour le transport et le positionnement de pièces

(30) Priorität: 30.11.1990 DE 4038137
(43) Veröffentlichungstag der Anmeldung: 03.06.1992
(73) Patentinhaber: INDUROBOT INDUSTRIELLE AUTOMATION AG, CH-8409 Winterthur (CH)
(72) Erfinder: Müller, Willi, CH-8400 Winterthur (CH)
(74) Vertreter: Rottmann, Maximilian R.

(56) Entgegenhaltungen:
- EP-A- 0 076 947
- EP-A- 0 269 333
- DE-A- 3 509 803
- DE-U- 8 903 723

## Beschreibung

Die vorliegende Erfindung betrifft ein Handhabungsgerät zum Transportieren und Positionieren von Werkstücken, insbesondere zum Beschicken von Bearbeitungseinrichtungen und zum Palettieren der bearbeiteten Werkstücke.

In Industrien mit automatischen Fertigungsabläufen benutzt man programmierbare Handhabungsgeräte, welche das zu bearbeitende Werkstück einer Palette an einer bestimmten Stelle entnehmen und einer Bearbeitungseinrichtung zuführen und danach das bearbeitete Werkstück der Bearbeitungseinrichtung wieder entnehmen und an einer bestimmten Stelle einer Palette ablegen. In diesem Anwendungsbereich gelangen, ähnlich wie bei der Handhabung von Werkzeugen, Roboter verschiedener Art zur Anwendung. Man kennt einerseits die sogenannten Flächenportal-Roboter, welche in einem kubischen Gerüst eine in allen drei Hauptrichtungen linear verschiebbare Greifvorrichtung aufweisen, und andererseits die sogenannten Schwenkarm-Roboter, welche an einem ortsfesten, drehbaren Sockel einen um eine horizontale Achse drehbaren Schwenkarm aufweisen, wobei der Schwenkarm zusätzlich mit einem Gelenk nach Art eines Ellbogens versehen ist. In beiden Fällen ist die Greifvorrichtung mit der erforderlichen Anzahl von Drehachsen für die jeweilige Orientierung des Werkstücks im Raum ausgerüstet.

Der Flächenportal-Roboter, bei dem zur Einstellung der Greifvorrichtung drei Linearachsen vorgesehen sind, hat einen kubischen Arbeitsraum, im Gegensatz zum Schwenkarm-Roboter, bei dem zur Einstellung der Greifvorrichtung drei Drehachsen vorgesehen sind und welcher einen, meist sektorweise begrenzten, kugelförmigen Arbeitsraum hat. Im allgemeinen ist der erreichbare Ausnutzungsgrad bei einem kubischen Arbeitsraum besser als bei einem kugelförmigen, teilweise zusätzlich begrenzten Arbeitsraum. Ferner hat ein Roboter, welcher vorwiegend mit Linearachsen arbeitet, generell eine höhere Steifigkeit als ein ausschliesslich mit Drehachsen arbeitender Roboter.

Zum Palettieren ist der Flächenportal-Roboter zudem besser geeignet, weil zur Entnahme der Werkstücke aus den entsprechenden Aufnahmen der Palette und die Ablage der Werkstücke in diese Aufnahmen in den meisten Anwendungsfällen eine lineare vertikale Bewegung der Greifvorrichtung erfordern und für diese Vertikalbewegung beim Flächenportal-Roboter eine einfach zu steuernde Linearachse zur Verfügung steht. Demgegenüber benötigt der Schwenkarm-Roboter für diesen Zweck zwei Drehachsen, wobei für die Steuerung der kombinierten Bewegung dieser Drehachsen ein ziemlich hoher Aufwand hinsichtlich der Rechenmittel und der Programmierung erforderlich ist, insbesondere wenn, wie beim Positionieren, an die Genauigkeit des Bewegungsablaufs hohe Anforderungen gestellt werden.

Andererseits ist der Raumbedarf für einen Flächenportal-Roboter erheblich grösser als für einen Schwenkarm-Roboter.

Für die Lösung zahlreicher Beschickungsaufgaben fällt jedoch der Einsatz von Flächenportal- oder Schwenkarm-Robotern der beschriebenen Art, trotz ihrer universellen Anwendbarkeit und Anpassungsfähigkeit, wegen der verhältnismässig hohen Anschaffungskosten ausser Betracht. In solchen Fällen besteht deshalb der Bedarf nach Handhabungsgeräten für den eingangs genannten Zweck, welche mit geringerem Material- und Arbeitsaufwand herstellbar sind und trotzdem über die erforderlichen Eigenschaften hinsichtlich Funktionstüchtigkeit, Steifigkeit und Genauigkeit des Geräts verfügen.

Ein bekanntes, in diesem Sinne entwickeltes Handhabungsgerät zur Beschickung von Werkzeugmaschinen verfügt über einen Schwenkarm mit horizontaler Schwenkachse, welcher zur Veränderung seiner Länge einen linear verschiebbaren, mit der Greifvorrichtung versehenen Armteil aufweist. Dieser Schwenkarm ist an einem im Raum fest orientierten Support mit seitlich ausserhalb der räumlichen Begrenzung des Supports verlaufender Schwenkebene gelagert. Der Support ist seinerseits in horizontaler Richtung quer zur Schwenkebene des Schwenkarms linear verschiebbar. Dieses sehr einfach aufgebaute und kostengünstige Handhabungsgerät ermöglicht zwar vielseitige Aufnahme- und Ablagemöglichkeiten; zur Palettierung von Werkstücken ist es aber aus oben genannten Gründen (fehlende Linearachse in vertikaler Richtung) weniger geeignet. Ein weiterer Nachteil sind die im Schwenkarm vorhandenen Antriebsmittel für die Linearbewegung der Greifvorrichtung. Diese Antriebsmittel haben, neben der Greifvorrichtung und der Traglast, einen bedeutenden Anteil an der Massenträgheit des Schwenkarms und bestimmen damit massgeblich die für den Schwenkantrieb erforderliche Leistung bzw. die Arbeitsgeschwindigkeit des Schwenkarms.

Es ist die Aufgabe der Erfindung, in Anlehnung an das oben beschriebene Lösungskonzept, aber unter Vermeidung der Nachteile desselben, ein einfach und kostengünstig aufgebautes Handhabungsgerät zu schaffen, welches mit verhältnismässig geringem steuerungstechnischen Aufwand das Beschicken von Bearbeitungseinrichtungen und das Palettieren von Werkstücken ermöglicht.

Bei einem Handhabungsgerät zum Transportieren und Positionieren von Werkstücken, insbesondere zum Beschicken von Bearbeitungseinrichtungen und zum Palettieren der bearbeiteten Werkstücke, nach dem Oberbegriff des Patentanspruchs 1 wird diese Aufgabe durch die Merkmale im kennzeichnenden Teil des Patentanspruchs 1 gelöst.

Mit dieser Lösung erreicht man einen Arbeitsbereich des Handhabungsgeräts, welcher demjenigen eines Flächenportal-Roboters gleichkommt, aber mit erheblich geringerem Aufwand. Das Gerüst beschränkt sich auf eine einzige Linearführung für den Untersatz. Die zum Palettieren erwünschte Linearachse in vertikaler Richtung ist durch eine entsprechende Verschiebbarkeit des Supports verwirklicht. Einen wesentlichen Anteil am Transportweg des Werkstücks von der Ablage zur Bearbeitungseinrichtung, und umgekehrt, übernimmt der Schwenkarm, welcher sehr gewichtsarm aufgebaut werden kann, weil keine das Gewicht des Schwenkarms erhöhende Antriebsmittel in diesem vorhanden sind, wie das bei Schwenkarmen mit einem Zwischengelenk oder einen ausfahrbaren Armteil der Fall ist. Mit gleicher Leistung des Schwenkantriebs lässt sich somit eine höhere Antriebsgeschwindigkeit erreichen. Auch hinsichtlich der Steifigkeit des Geräts und der Positioniergenauigkeit lassen sich annähernd gleiche Massstäbe anlegen wie bei einem Flächenportal-Roboter, da für die Einstellung der Greifvorrichtung zwei Linearachsen und nur eine Drehachse vorhanden sind. Ausserdem befinden sich die belastungsmässig weniger empfindlichen Linearachsen in dem vom Aufbau her am stärksten belasteten Bereich des Geräts, während die Drehachse nur mit dem verhältnismässig leichten Schwenkarm, einschliesslich der ohnehin vorhandenen Greifvorrichtung, belastet ist.

Vorzugsweise ist die Greifvorrichtung an der dem Support abgewandten Seite des Schwenkarms angeordnet. Da sich die Schwenkebene des Schwenkarms zudem ausserhalb der räumlichen Begrenzung des Supports befindet, ergibt sich die Möglichkeit, die Greifvorrichtung längs eines vollen Kreisumfangs zu bewegen. Um ein Werkstück von der einen Seite des Geräts auf die andere Seite zu transportieren, kann in diesem Fall die Greifvorrichtung entweder auf einem Kreisbogen unterhalb der Schwenkachse oder auf einem Kreisbogen oberhalb der Schwenkachse bewegt werden. Aus praktischen und sicherheitstechnischen Gründen wird man in der Regel die untere Kreisbahn benützen. Schwierigkeiten können jedoch dann auftreten, wenn das zu transportierende Werkstück in seiner Ausdehnung quer zur Schwenkebene so gross ist, dass es auf seiner Kreisbahn an den Führungselementen für die Vertikalebewegung des Supports nicht vorbeikommt. Um diesen Schwierigkeiten aus dem Weg zu gehen, wird gemäss einer Weiterbildung der Erfindung vorgeschlagen, dass der Support am freien Ende einer Säule fest angeordnet ist, welche ihrerseits am Untersatz vertikal verschiebbar gelagert ist. Auf diese Weise lässt sich die Greifvorrichtung mit einem sperrigen Werkstück wenigstens auf dem oberen Teil der Kreisbahn, auch bei gleichzeitiger Absenkung des Supports, ohne Behinderung durch Geräteteile bewegen. Dies im Gegensatz zu einer an sich bekannten Anordnung, bei welcher der Träger einer Greifvorrichtung entlang einer in achsialer Richtung feststehenden Säule verschiebbar ist.

Zur Erzielung einer anderen als kreisförmigen Bewegung der Greifvorrichtung in der Schwenkebene, z.B. einer linearen Horizontalbewegung, für den Transport der Werkstücke von der Ablage zur Bearbeitungseinrichtung und umgekehrt, kann eine kombinierte Steuerung der Schwenkachse und der Vertikalachse vorgesehen sein. Eine solche Steuerung ist jedoch in diesem Fall wesentlich weniger kompliziert als eine entsprechende kombinierte Steuerung bei der Positionierung, da an die Bahngenauigkeit des Transportweges keine vergleichbar hohe Anforderungen gestellt werden.

Zweckmässigerweise ist die Greifvorrichtung um eine zur Schwenkachse des Schwenkarms parallele Achse schwenkbarer an diesem gelagert. Derart ausgerüstete Handhabungsgeräte benötigen im Falle eines knickbaren oder ausziehbaren Schwenkarms zusätzliche Steuerfunktionen zur Synchronisierung der Schwenkbewegung des Schwenkarms und der erforderlichen gegenläufigen Schwenkbewegung der Greifvorrichtung, um eine vorgegebene Orientierung der Greifvorrichtung beim Bewegen des Schwenkarms aufrechtzuerhalten. Bei einem starren Schwenkarm von bestimmter Länge dagegen lassen sich diese zusätzlichen Steuermittel in einfacher Weise durch eine mechanische Synchronisierung ersetzen, insbesondere durch eine Parallelführung, welche die Greifvorrichtung mit dem Support des Schwenkarms verbindet.

Die Parallelführung kann im einfachsten Fall durch ein Gestänge gebildet sein. Allerdings begrenzt ein solches Gestänge den Bewegungsbereich des Schwenkarms und damit die Anwendungsmöglichkeiten dieser Lösung. Eine in dieser Beziehung günstigere Lösung besteht darin, dass die Parallelführung durch ein Umschlingungsgetriebe mit formschlüssiger Kraftübertragung (z.B. mit Zahnriemen oder Kette) zwischen zwei Rädern gebildet ist, wobei das eine Rad mit dem Support und das andere Rad mit der Greifvorrichtung betrieblich fest verbunden ist.

Zur Veränderung der Orientierung der Greifvorrichtung innerhalb der Schwenkebene kann die Verankerung der Parallelführung am Support des Schwenkarms, also z.B. das supportseitige Rad des Umschlingungsgetriebes, in der Schwenkebene des Schwenkhebels winkelmässig verstellbar und in verschiedenen Winkellagen fixierbar sein. In gewissen Fällen kann dabei die Verstellbewegung der Synchronisierbewegung unterlagert sein.

Um eine Veränderung der Orientierung des transportierten Werkstücks in einer zur Schwenkebene senkrechten Ebene zu ermöglichen, kann die Greifvorrichtung in an sich bekannter Weise mit einem drehbaren Greifer versehen sein, dessen Drehachse in der Schwenkebene des Schwenkarms liegt.

Für den anlagenmässigen Aufbau des Handhabungsgerätes besteht eine vorteilhafte Lösung darin, dass die Längsführung für den horizontal verfahrbaren Untersatz an einem ortsfesten Gestell montiert ist, welches zudem eine Plattform zur Ablage von Werkstück-Paletten trägt, wobei an der Plattform Mittel zur Positionierung der Paletten in einer bestimmten Orientierung aufweist und die Richtung der Längsführung in einer festen Beziehung zu dieser Palettenorientierung steht.

In der Zeichnung sind Ausführungsbeispiele der Erfindung schematisch dargestellt, und zwar zeigen:
- Fig. 1: den Grundriss des erfindungsgemässen Handhabungsgeräts in einer typischen Anordnung zwischen einer Ablagestelle für mit Werkstücken beladene Paletten und einer mit den einzelnen Werkstücken zu beschickenden Bearbeitungseinrichtung;
- Fig. 2: Seitenansicht des Handhabungsgeräts nach Fig. 1;
- Fig. 3: Seitenansicht wie Fig. 2, mit eingezeichneten Zwischenstellungen der am Quertransport eines Werkstücks beteiligten Geräteteile; und
- Fig. 4: Seitenansicht wie Fig. 3, aber mit einer anderen Art von Greifer.

Die in den Zeichnungen dargestellten, generell mit 1 bezeichneten Handhabungsgeräte sind dazu bestimmt, Werkstücke 2, z.B. zylindrische, stangenförmige Teile, einer mit diesen Werkstücken bestückten Palette 3 zu entnehmen und einer nur andeutungsweise dargestellten Bearbeitungseinrichtung 4 zuzuführen, sowie die bearbeiteten Werkstücke hernach wieder auf einer Palette abzulegen. Bei der letzteren kann es sich um die gleiche Palette 3 oder um eine weitere, zur Aufnahme der Werkstücke 2 bereitgestellte Palette 5 handeln. Die Paletten 3, 5 sind mit einer Mehrzahl von zylindrischen Bohrungen 6 versehen, welche reihenweise angeordnet sind und die Werkstücke 2 in stehender Lage aufnehmen. Beim Einsatz in die Bearbeitungseinrichtung 4 nehmen die Werkstücke 2 dagegen eine liegende Lage ein. Die Paletten 3, 5 ruhen auf der Plattform 7 eines Untergestells 8, wobei diese Plattform 7 an sich bekannte Mittel zur Positionierung der Paletten 3, 5 in einer bestimmten Orientierung aufweist. Diese Mittel sind hier der Einfachheit halber durch Aufnahmewannen 9 dargestellt, welche die Paletten 3, 5 seitlich umfassen.

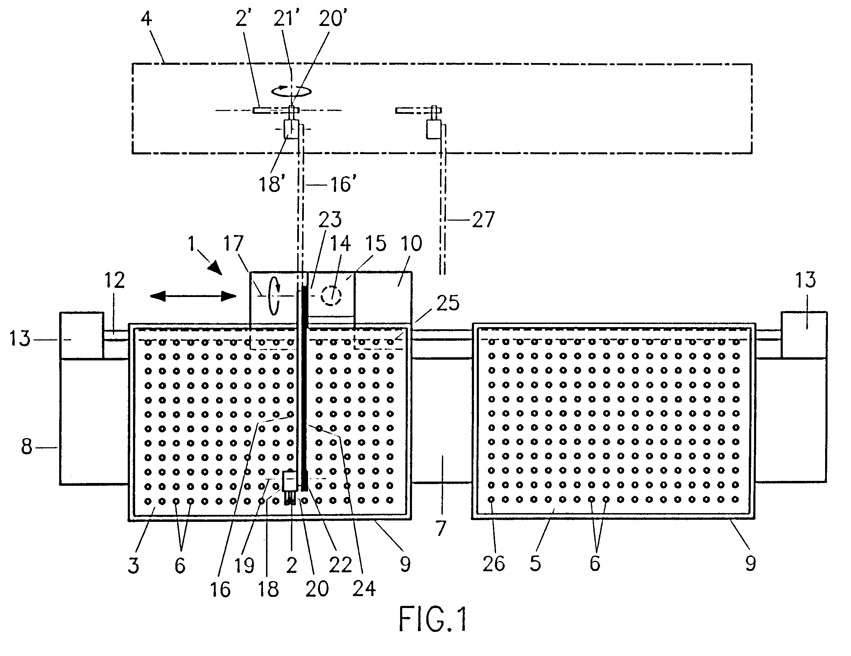

Das zwischen dem Untergestell 8 und der Bearbeitungseinrichtung 4 angeordnete Handhabungsgerät 1 besitzt einen horizontal verfahrbaren Untersatz, welcher im wesentlichen aus einem Schlitten 10 und einem mit diesem fest verbundenen, vertikal angeordneten Führungskörper 11 besteht. Der Schlitten 10 ist auf zwei horizontal verlaufenden Führungsstangen 12 linear geführt, welche an den Enden des Untergestells 8 in je einem, am Untergestell 8 befestigten Block 13 verankert sind. Die Richtung dieser Führungsschienen 12 steht in einer festen Beziehung zur Orientierung der Paletten 3, 5, indem sie parallel zur einen Hauptrichtung der positionierten Paletten 3, 5 und damit parallel zu den Längsreihen der Aufnahmebohrungen 6 für die Werkstücke 2 verläuft. Im Führungskörper 11 ist eine Säule 14 vertikal verschiebbar gelagert, welche an ihrem oberen Ende einen im Raum fest orientierten Support 15 trägt. Ein Schwenkarm 16 ist um eine horizontale Achse 17 am Support 15 gelagert. Dieser Schwenkarm 16 hat eine bestimmte Länge und ist über die ganze Länge starr ausgebildet. Am freien Ende des Schwenkarms 16 ist auf der dem Support 15 abgewandten Seite desselben eine Greifvorrichtung 18 um eine zur Schwenkachse 17 des Schwenkarms 16 parallele Achse 19 schwenkbar angeordnet. Sie ist mit einem drehbaren Greifer 20 ausgerüstet, dessen Drehachse 21 in der Schwenkebene des Schwenkarms 16 liegt. Dieser Greifer 20 weist im vorliegenden Beispiel nach den Fig. 1 bis 3 zwei bewegliche Backen auf, welche das Werkstück 2 mit radialem Zugriff seitlich umfassen. Greifvorrichtungen dieser Art sind an sich bekannt und hier nicht im einzelnen beschrieben.

Die vom Anfangszustand des Handhabungsgeräts abweichenden Lagen der bewegten Teile desselben sind mit apostrophierten Bezugszeichen versehen.

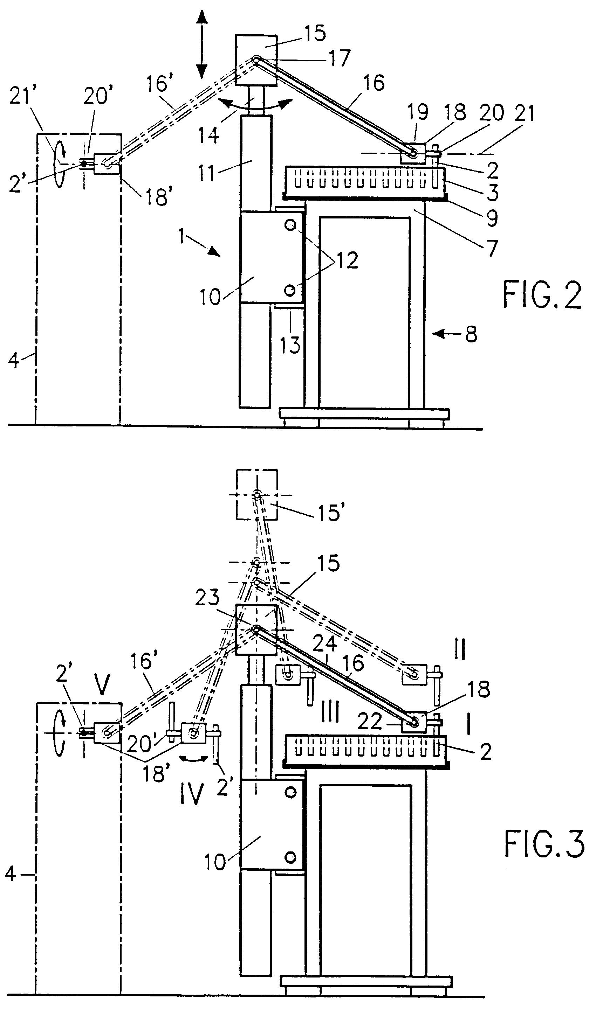

Zu Beginn des Werkstücktransports von der Palette 3 zur Bearbeitungseinrichtung 4, d.h. beim Erfassen eines in einer Bohrung 6 der Palette 3 befindlichen Werkstücks 2, ist die Greifvorrichtung 18 bezüglich ihrer Drehachse 19 horizontal orientiert, wobei der Greifer 20 in Fig. 2 nach rechts gerichtet ist. Am Ende des Werkstücktransports, d.h. beim Einsetzen des Werkstücks 2' in die Bearbeitungseinrichtung 4, befindet sich die Greifvorrichtung 18' in einer um 180° gedrehten Lage, wobei der Greifer 20 nach links gerichtet und zudem um 90° gedreht ist, so dass das Werkstück 2' nunmehr eine horizontale Lage einnimmt. Die Lagesteuerung der Greifvorrichtung 18 erfolgt nun in der Weise, dass die anfängliche Orientierung der Greifvorrichtung 18 beim Verschwenken des Schwenkarm 16 durch mechanische Mittel aufrechterhalten wird, welche die Schwenkbewegung des Schwenkarms 16 und die erforderliche gegenläufige Schwenkbewegung der Greifvorrichtung 18 synchronisieren, und dass ausgehend von dieser Orientierungsbasis eine Drehung der Greifvorrichtung 18 um 180° vorgenommen wird. Zur Aufrechterhaltung einer vorgegebenen Orientierung der Greifvorrichtung 18 ist diese durch eine Parallelführung mit dem Support 15 des Schwenkarms 16 verbunden. Im vorliegenden Beispiel ist diese Parallelführung durch ein Umschlingungsgetriebe mit formschlüssiger Kraftübertragung gebildet, indem zwei Räder 22 und 23 durch einen Zahnriemen 24 miteinander verbunden sind, wobei das eine Rad 22 mit dem Support 15 und das andere Rad 23 mit der Greifvorrichtung 18 betrieblich fest verbunden ist. Durch eine winkelmässige Verstellung des Rades 22 gegenüber dem Support 15, im vorliegenden Fall um 180°, lässt sich die Orientierung der Greifvorrichtung 18 in der gewünschten Weise verändern. Vorzugsweise erfolgt diese Verstellung ebenfalls während der Schwenkbewegung des Schwenkarms 16.

Der Bewegungsablauf des Handhabungsgerätes 1 ist für den Beschickungsvorgang aus den Fig. 1 und 3 ersichtlich. Aufgrund der als Beispiel gezeigten Ausbildung des Handhabungsgeräts 1 ist bei der Entnahme der Werkstücke 2 von der Palette 3 eine bestimmte Reihenfolge einzuhalten, und zwar ist von der Eckposition 25 auszugehen, und die Werkstücke 2 sind, entweder in Längsrichtung oder in Querrichtung, der Reihe nach zu entnehmen. Auf diese Weise lassen sich die Werkstücke 2 von der Greifvorrichtung 18 erfassen, ohne Behinderung durch die noch verbliebenen Werkstücke. Beim Ablegen der bearbeiteten Werkstücke 2 in die Bohrungen 6 der Palette 5 ist in der gleichen Weise vorzugehen, wobei von der Eckposition 26 auszugehen ist.

In Fig. 3 sind die Anfangslage der Greifvorrichtung 18 sowie einige Zwischenlagen und die Endlage derselben mit den römischen Ziffern I bis V bezeichnet. Aus der Anfangslage I wird zunächst der Support 15 bei gleichbleibender Schwenklage des Schwenkarms 16 angehoben (II), um das Werkstück 2 in vertikaler Richtung aus der Bohrung 6 zu entfernen. Zur Überführung des Werkstücks 2 von der Palettenseite auf die Seite der Bearbeitungseinrichtung 4 wird nun der Schwenkarm 16 im Uhrzeigersinn verschwenkt. Gleichzeitig mit dieser Schwenkbewegung wird der den Schwenkarm 16 tragende Support 15 weiter angehoben, und zwar so weit (III), dass die Greifvorrichtung 18 mit dem Werkstück 2 ungehindert über die Palette 3 hinwegfahren kann. Etwas weniger hoch muss der Support 15 angehoben werden, wenn der Schlitten 10 horizontal in eine Lage verschoben wird, in welcher die Schwenkebene des Schwenkarms 16 zwischen die beiden Paletten 3 und 5 zu liegen kommt (Schwenkarmlage 27 in Fig. 1), weil das den Schwenkbereich dort begrenzende Hindernis, nämlich die Plattform 7, gegenüber der Palette tiefer liegt und zurückgesetzt ist.

Sobald der Schwenkarm 16 den Totpunkt überschreitet, kann der Support 15 wieder abgesenkt werden (IV). Zweckmässigerweise wird in dieser Phase auch, wie angedeutet, die erforderliche Drehung der Greifvorrichtung 18' um 180° und die Drehung des Greifers 20' mit dem Werkzeug 2' um 90° vorgenommen, damit das Werkstück 2' die zum Einsatz desselben in die Bearbeitungseinrichtung 4 gewünschte Lage einnimmt. Selbstverständlich ist dazu jeweils auch eine entsprechende Horizontalbewegung des Schlittens 10 erforderlich.

Der Palettiervorgang erfolgt in entsprechender Weise, wobei die beschriebenen Phasen I bis V in umgekehrter Reihenfolge durchlaufen werden.

Selbstverständlich entfallen die in den Phasen IV und V vorgenommenen zusätzlichen Drehungen (180° bzw. 90°) der Greifvorrichtung 18 und des Greifers 20, wenn das Werkstück 2 mit der ursprünglichen Orientierung, also vom Greifer 20 aus senkrecht nach unten gerichtet, in die Bearbeitungseinrichtung 4 eingesetzt werden soll.

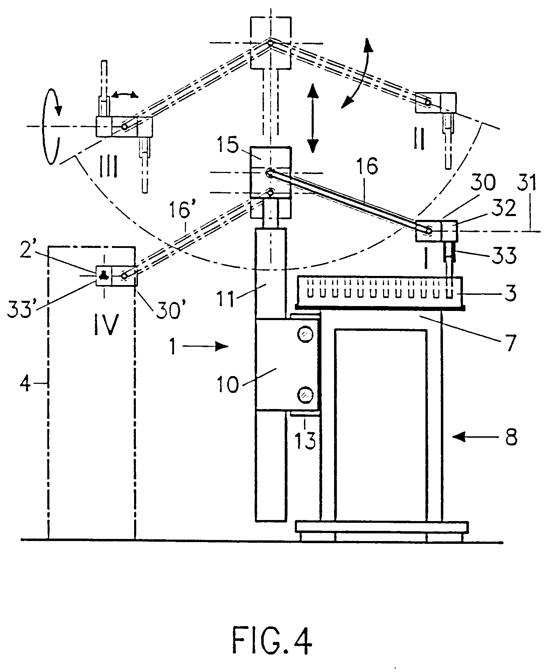

Die Fig. 4 zeigt das zuvor beschriebene Handhabungsgerät 1 mit einer anderen Greifvorrichtung 30, welche einen um die Achse 31 drehbaren Greifer 32 mit einem Dreibackenfutter 33 aufweist. Dieser Greifer 32 erfasst das Werkstück 2 an seinem oberen Ende, was gegenüber dem seitlichen Zugriff eine freiere Handhabung der Werkstücke im Palettenbereich ermöglicht. Im weiteren zeigt die Fig. 4 vier Phasen I bis IV eines Beschickungsvorgangs, der im wesentlichen mit demjenigen übereinstimmt, welcher im Zusammenhang mit der Ausführungsform nach den Fig. 1 bis 3 beschrieben wurde.

## Patentansprüche

1. Handhabungsgerät zum Transportieren und Positionieren von Werkstücken (2), insbesondere zum Beschicken von Bearbeitungseinrichtungen (4) und zum Palettieren der bearbeiteten Werkstücke (2), mit einem Schwenkarm (16) mit horizontaler Schwenkachse (17) und einer am freien Ende desselben angeordneten Greifvorrichtung (18), sowie mit einem im Raum fest orientierten Support (15), an welchem der Schwenkarm (16) mit seitlich ausserhalb der räumlichen Begrenzung des Supports verlaufender Schwenkebene gelagert ist und welcher in horizontaler Richtung quer zur Schwenkebene des Schwenkarms (16) linear verschiebbar ist, dadurch gekennzeichnet, dass ein über seine ganze Länge starrer Schwenkarm (16) mit unveränderlicher Länge vorgesehen ist und dass der Support (15) am freien Ende einer Hubvorrichtung (11, 14) angeordnet ist, welche ihrerseits an einem horizontal verfahrbaren Untersatz (10) gelagert ist.

2. Handhabungsgerät nach Anspruch 1, dadurch gekennzeichnet, dass die Hubvorrichtung eine Säule (14), an deren freiem Ende der Support (15) fest gelagert ist, und einen Führungskörper (11) umfasst, in welchem die Säule (14) höhenverstellbar geführt ist

3. Handhabungsgerät nach Anspruch 1, dadurch gekennzeichnet, dass die Greifvorrichtung (18) um eine zur Schwenkachse (17) des Schwenkarms (16) parallele Achse (19) schwenkbar an diesem gelagert ist.

4. Handhabungsgerät nach Anspruch 3, dadurch gekennzeichnet, dass zur Aufrechterhaltung einer vorgegebenen Orientierung der Greifvorrichtung (18) beim Schwenken des Schwenkarms (16) die Schwenkbewegung des Schwenkarms (16) und die erforderliche gegenläufige Schwenkbewegung der Greifvorrichtung (18) mechanisch synchronisiert sind.

5. Handhabungsgerät nach Anspruch 4, dadurch gekennzeichnet, dass die Greifvorrichtung (18) durch eine Parallelführung mit dem Support (15) des Schwenkarms (16) verbunden ist.

6. Handhabungsgerät nach Anspruch 5, dadurch gekennzeichnet, dass die Parallelführung durch ein Gestänge gebildet ist.

7. Handhabungsgerät nach Anspruch 5, dadurch gekennzeichnet, dass die Parallelführung durch ein Umschlingungsgetriebe mit formschlüssiger Kraftübertragung zwischen zwei Rädern (22, 23) gebildet ist, wobei das eine Rad (23) mit dem Support (15) des Schwenkarms (16) und das andere Rad (22) mit der Greifvorrichtung (18) betrieblich fest verbunden ist.

8. Handhabungsgerät nach Anspruch 5, dadurch gekennzeichnet, dass zur Veränderung der Orientierung der Greifvorrichtung (18) innerhalb der Schwenkebene die Verankerung der Parallelführung am Support (15) des Schwenkarms (16) in der Schwenkebene desselben winkelmässig verstellbar und in verschiedenen Winkellagen fixierbar ist.

9. Handhabungsgerät nach Anspruch 1, dadurch gekennzeichnet, dass die Greifvorrichtung (30) mit einem drehbaren Greifer (32) versehen ist, dessen Drehachse (31) in der Schwenkebene des Schwenkarms (16) liegt.

10. Handhabungsgerät nach Anspruch 1, dadurch gekennzeichnet, dass die Längsführung (12, 13) für den horizontal verfahrbaren Untersatz (10) an einem ortsfesten Gestell (8) montiert ist, welches zudem eine Plattform (7) zur Ablage von Werkstück-Paletten (3, 5) trägt, wobei an der Plattform (7) Mittel (9) zur Positionierung der Paletten (3, 5) in einer bestimmten Orientierung aufweist und die Richtung der Längsführung (12) in einer festen Beziehung zu dieser Palettenorientierung steht.

## Claims

1. Handling apparatus for transporting and positioning work-pieces (2), in particular for supplying machining devices (4) and for palletising the machined work-pieces (2), with a swivel arm (16) having a horizontal swivel axis (17) and a gripping device (18) located at the free end thereof, as well as with a support (15) oriented in a fixed manner in space, on which the swivel arm (16) is mounted with a swivel plane extending laterally outside the spatial boundary of the support and which is able to move in a linear manner in the horizontal direction at right angles to the swivel plane of the swivel arm (16), characterised in that a swivel arm (16) with an invariable length, which is rigid over its entire length, is provided and that the support (15) is located at the free end of an elevating device (11, 14), which is in turn mounted on a horizontally displaceable base (10).

2. Handling apparatus according to Claim 1, characterised in that the elevating device comprises a column (14), at the free end of which the support (15) is securely mounted and comprises a guide body (11), in which the column (14) is guided to be vertically adjustable.

3. Handling apparatus according to Claim 1, characterised in that the gripping device (18) is mounted to tilt about an axis (19) parallel to the swivel axis (17) of the swivel arm (16), on the latter.

4. Handling apparatus according to Claim 3, characterised in that in order to maintain a predetermined orientation of the gripping device (18) at the time of tilting of the swivel arm (16), the tilting movement of the swivel arm (16) and the necessary opposing tilting movement of the gripping device (18) are synchronised mechanically.

5. Handling apparatus according to Claim 4, characterised in that the gripping device (18) is connected by a parallel guide to the support (15) of the swivel arm (16).

6. Handling apparatus according to Claim 5, characterised in that the parallel guide is formed by a linkage.

7. Handling apparatus according to Claim 5, characterised in that the parallel guide is formed by contact gearing with a positive power transmission between two gears (22, 23), the one gear (23) having a secure operating connection to the support (15) of the swivel arm (16) and the other gear (22) to the gripping device (18).

8. Handling apparatus according to Claim 5, characterised in that in order to vary the orientation of the gripping device (18) within the tilting plane, the anchoring of the parallel guide on the support (15) of the swivel arm (16) can be adjusted as regards its angle in the tilting plane thereof and can be fixed in different angular positions.

9. Handling apparatus according to Claim 1, characterised in that the gripping device (30) is provided with a rotatable gripper (32), whereof the axis of rotation (31) lies in the swivel plane of the swivel arm (16).

10. Handling apparatus according to Claim 1, characterised in that the longitudinal guide (12, 13) for the horizontally travelling base (10) is mounted on a stationary frame (8), which in addition supports a platform (7) for depositing work-piece pallets (3, 5), on the platform (7) means (9) are provided for positioning the pallets (3, 5) in a certain orientation and the direction of the longitudinal guide (12) being in a fixed relationship to this pallet orientation.

## Revendications

1. Appareil de manipulation pour le transport et le positionnement de pièces de travail (2), en particulier pour l'alimentation de dispositifs de traitement (4) et la palettisation des pièces de travail (2) traitées, comprenant un bras pivotant (16) à axe de pivotement (17) horizontal et avec un dispositif de préhension (18) disposé à l'extrémité libre de ce bras, ainsi qu'un support (15) orienté de façon fixe dans l'espace, dans lequel le bras pivotant (16) est disposé, le plan de pivotement s'étendant latéralement à l'extérieur de la délimitation spatiale du support, et lequel support peut coulisser de façon rectiligne dans la direction horizontale transversalement au plan de pivotement du bras pivotant (16), caractérisé en ce qu'un bras pivotant (16) de longueur inchangeable rigide sur toute sa longueur est prévu, et en ce que le support (15) est disposé à l'extrémité libre d'un dispositif de levage (11, 14), lequel est quant à lui logé dans un socle (10) mobile horizontalement.

2. Appareil de manipulation selon la revendication 1, caractérisé en ce que le dispositif de levage comprend une colonne (14), à l'extrémité libre de laquelle le support (15) est placé de façon fixe, et un corps de guidage (11) dans lequel la colonne (14) est guidée à une hauteur réglable.

3. Appareil de manipulation selon la revendication 1, caractérisé en ce que le dispositif de préhension (18) est fixé au bras pivotant (16) sur un axe (19) parallèle à l'axe de pivotement (17) de celui-ci.

4. Appareil de manipulation selon la revendication 3, caractérisé en ce que pour le maintien d'une orientation prédéterminée du dispositif de préhension (18) lors du pivotement du bras pivotant (16), le mouvement de pivotement du bras pivotant (16) et le mouvement de pivotement contraire nécessaire du dispositif de préhension (18) sont synchronisés mécaniquement.

5. Appareil de manipulation selon la revendication 4, caractérisé en ce que le dispositif de préhension (18) est relié au support (15) du bras pivotant (16) par un guidage parallèle.

6. Appareil de manipulation selon la revendication 5, caractérisé en ce que le guidage parallèle est constitué d'une tringlerie.

7. Appareil de manipulation selon la revendication 5, caractérisé en ce que le guidage parallèle est constitué d'un mécanisme d'enroulement avec transmission de puissance par coopération de forme entre deux roues (22, 23), l'une (23) des roues étant reliée de façon fixe en fonctionnement au support (15) du bras pivotant (16), et l'autre roue (22), au dispositif de préhension (18).

8. Appareil de manipulation selon la revendication 5, caractérisé en ce que pour la modification de l'orientation du dispositif de préhension (18) à l'intérieur du plan de pivotement, l'ancrage du guidage parallèle est mobile angulairement sur le support (15) du bras pivotant (16) dans le plan de pivotement de celui-ci et peut être fixé dans différentes positions angulaires.

9. Appareil de manipulation selon la revendication 1, caractérisé en ce que le dispositif de préhension (30) est muni d'un grappin (32) rotatif dont l'axe de rotation (31) est situé dans le plan de pivotement du bras pivotant (16).

10. Appareil de manipulation selon la revendication 1, caractérisé en ce que le guidage longitudinal (12, 13) pour le socle (10) mobile horizontalement est monté sur un bâti (8) fixe, lequel supporte de plus une plate-forme (7) pour la réception de palettes (3, 5) de pièces de travail, des moyens (9) pour le positionnement des palettes (3, 5) suivant une orientation déterminée étant prévus sur la plate-forme (7), et la direction du guidage longitudinal (12) étant en relation fixe par rapport à cette orientation des palettes.
